# EUROPÄISCHE PATENTSCHRIFT

(11) **EP 1 336 388 B1**
(45) Veröffentlichungstag und Bekanntmachung des Hinweises auf die Patenterteilung: **12.12.2007**
(21) Anmeldenummer: 03090037.7
(22) Anmeldetag: 10.02.2003
(51) Int. Cl.: A61C 8/00

(54) **Dentalimplantat**
Dental implant
Implant dentaire

(30) Priorität: 14.02.2002 DE 20202424 U
(43) Veröffentlichungstag der Anmeldung: 20.08.2003
(73) Patentinhaber: Dr. Ihde Dental AG, 8738 Uetliburg (CH)
(72) Erfinder: Ihde, Stefan, Dr., 8738 Uetliburg (CH)
(74) Vertreter: Radwer, Dieter

(56) Entgegenhaltungen:
- WO-A-01/93775
- DE-A- 4 229 241
- DE-U- 29 917 858
- FR-A- 2 302 715

## Beschreibung

Die Erfindung betrifft ein Dentalimplantat für die enossale und kombiniert enossale/subperiostale, basale Osseointegration mit einem aus dem Kiefer herausragenden, Gewindeträger zur Aufnahme und Befestigung eines Abutments, einer Krone, einer Prothese oder einer dentalen Überkonstruktion, der orthogonal zu einem kraftübertragenden Fuß- oder Basisteil angeordnet und mit dem Basisteil über Stege verdrehfest verbunden ist, wobei das Basis- oder Fußteil durch einen ringförmigen Grundkörper oder durch einen in sich geschlossenen Rahmen aus unterschiedlichen geometrischen Grundformen gebildet ist.

Bekannt sind bereits dentale Schrauben-, Blatt- und Zylinderimplantate, die entlang der vertikalen Implantatachse osseointegrieren. Basal osseointegrierte Implantate entwickelten sich aus kasten- und scheibenförmigen Typen. So beschreibt US 3 925 892 (Julliet) ein Implantat mit einem rechteckigen Basisteil und einem in das Basisteil eingeschraubten Gewindeträger. Aus FR 2 302 715 (Clune-Cost) ist ein einstückiges Implantat mit einem separaten Abutment und einem Gewinde am vertikalen Implantatanteil bekannt. Für einen solchen Implantattyp entwickelte Scortecci gemäß US 4 722 687 später einen Cutter als Osteotomieinstrument bzw. ein Implantat, welches als sein eigenes Einsetzinstrument dient - US 4 815 974. Weniger bedeutsam sind symmetrisch ausgebildete, laterale Implantate nach US 4 344 757 (Streel), sowie die Entwicklung nach US 4 964 801 (Kawahara), die eine unterbrochene, eher perforierte Oberfläche des als Scheibe ausgebildeten Basisteiles vorsieht.

Im Unterschied zu Implantaten, die entweder eine vollkommen starre konstruktive Ausbildung aufweisen oder entlang des vertikalen Gewindeträgers durch die dort vorgesehenen Oberflächenvergrösserungen (z. B. FR 2 302 715) Kräfte übertragen, wurden die ersten, wirklich basal osseointegrierenden Implantate erst in jüngster Zeit durch US 09/437 643, EP 0 935 949 A1 und DE 299 17 858 U1 vorgeschlagen. Auf der Grundlage dieser Implantate sind erstmals unabhängig vom Vorhandensein vertikalen Knochenangebots strategische Implantatpositionierungen und die Schaffung basal osseointegrierter Implantat-Prothetik-Systeme möglich.

So hat beispielsweise die ringförmige Ausbildung des Basisteiles und die Verbindung von Basisteil mit dem Gewindeträger über Stege - EP 0 935 949 A1 und DE 299 17 858 U1 - den Vorteil, dass der Gewindeträger bei auftretenden größeren Kräften geringfügig in die Spongiosa einfedern kann, während der ringförmige Außenrahmen in der Kompakta weiterhin fest verankert bleibt und hierdurch ein dauerhafter, fester Sitz des Implantates im Kieferknochen unterstützt wird.

Ferner wird durch die Positionierung des Gewindeträgers außerhalb des Schwerpunktes des Basisteiles im Zentrum der Kreisringhälfte und durch die Anordnung der Stege, vorzugsweise im Übergangsbereich zwischen der Kreisringhälfte und des rechteckförmigen Außenrahmens des Basisteiles neben der Aufnahme und Übertragung größerer Kräfte, insbesondere eine weitgehende Anpassung des einzusetzenden Implantates an die Anatomie des Kieferknochens und an das auf chirurgischem Wege durch Fräsen hergestellte Implantatbett erreicht.

Aus WO 01/93775 A1 ist ferner eine subgingivale Verbindungsanordnung bekannt, die zur Stabilisierung und Fixierung eines, an einer definierten Position inserierten Zentralimplantates dient. Mit Hilfe und Unterstützung dieser Verbindungsanordnung soll eine sofortige Belastung des inserierten Implantates ermöglicht werden. Gemäß einer vorteilhaften Ausführungsform besitzt die Verbindungsanordnung eine H - förmige Konfiguration, wobei das Zentralimplantat vom Mittelsteg bzw. vom Querbalken der H - Form aufgenommen und fixiert wird, während die Längsseiten der H - Form zum Kieferkamm abgebogen und zur Befestigung der Verbindungsvorrichtung mit zusätzlichen Insertionsstiften kortikal verankert werden. In den Längsseiten sind Aussparungen und Durchbrechungen vorgesehen, die zu einer Reduzierung der Bauhöhe und zu einer Ausbildung von Stege führen, wobei der Mittelsteg über Anschlussradien an die Längsseiten angeschlossen ist. Durch diese konstruktiven Maßnahmen soll eine gezielte Vorgabe für die Hauptverformungsrichtung geschaffen werden, um eine optimale Anpassung der Verbindungsvorrichtung an die jeweilige Anatomie des Kieferknochens zu erreichen und Deformierungen im Verbindungssteg bzw. in der Verbindung zum Zentralimplantat zu vermeiden.

Aufgrund der begrenzten Implantatanzahl je Kiefer werden an die einzusetzenden Implantate zunehmend besondere Anforderungen in materialtechnischer und konstruktiver Hinsicht gestellt.

Hierzu gehören, dass
- die Eigenschaften des Implantatmaterials dem des Knochens möglichst ähnlich sein sollen, wobei aufgrund der Korrosionsresistenz und der Biokompatibilität vorwiegend auf Titan zurückgegriffen wird;
- die mechanische Festigkeit des Implantates bei möglichtst kleinen Implantatabmessungen sehr hoch sein sollte, wobei die kleinen Dimensionen notwendig sind, um einen guten Infektionsschutz durch eine gute Durchblutung zu erreichen und eine möglichst kleine ununterbrochene Implantatoberfläche zu schaffen;
- sich die einzutragenden Kräfte gleichmäßig auf den cortikalen Knochen des Kiefers verteilen;
- keine Kraftübertragung über die vertikalen Implantatteile erfolgt;
- das in der dentalen Praxis bereitzuhaltende Sortiment an unterschiedlichen Implantatgrößen möglichst klein ist.

Mit zunehmender Grösse des Basisteiles resp. des Rahmens des Basisteiles werden vorteilhafterweise die auftretenden Kaukräfte weiter vom Gewindeträger entfernt in infektionssichere Knochenbereiche übertragen. Ebenso nehmen die elastischen Eigenschaften des Implantats zu, und es kommt zu einer Angleichung an die Elastizität des Knochens. Gleichzeitig tritt jedoch eine Zunahme der Kräfte im Bereich der horizontalen Implantatteile, insbesondere im Bereich des Gewindeträgers, ein. Dieser Kraftzuwachs wird auch durch zunehmende Hebelkräfte verursacht. In sehr ungünstigen Fällen kann es dadurch bei auftretenden Spitzenspannungen zu Frakturen und zu Brüchen am Implantat, insbesondere am Basisteil, kommen.

Der Erfindung liegt daher die Aufgabe zugrunde, ein Dentalimplantat mit einer Implantatgeometrie zu entwickeln, die eine schnelle, stressarme isoelastische Integration des Implantates in den Kieferknochen ermöglicht und gleichzeitig ein hohes Maß an Ermüdungs- und Bruchfestigkeit des basal osseointegrierten Implantates gewährleistet.

Erfindungsgemäß wird die Aufgabe durch ein Dentalimplantat nach den Merkmalen von Anspruch 1 gelöst. Vorteilhafte Weiterbildungen der Erfindung ergeben sich aus den Merkmalen der Unteransprüche 2 bis 21.

Während crestale Implantate, also Schrauben und Zylinder-Implantate, herstellerseitig bestimmungsgemäss starr hergestellt werden und somit zusammen mit den darauf befestigten Brücken zu starren Implantat-Prothetik-Systemen führen, ermöglichen die basal osseointegrierende Implantate entsprechend den Ansprüchen 1 bis 3 sowie 7 und 9 überraschenderweise eine annähernd isoelastische Verbindung zwischen dem compakten Knochen des Kiefers und der Prothetik, wobei die auftretenden Biegekräfte durch die erfindungsgemäße Geometrie des Basisteiles noch besser aufgenommen und mit geringeren Lastspitzen gleichmäßiger über das gesamte Basisteil verteilt werden.

Es hat sich nämlich erstaunlicherweise gezeigt, dass die vorgeblich "wissenschaftlich fundierte" Annahme, dass sich das Implantat im Knochen starr und ruhig verhalten muss, um keine Knochenauflösung zu erzeugen, so nicht stimmt. Befindet sich nämlich das Implantat in Knochenbereichen, die funktioneller Flexion unterliegen, so muss das Implantat dieser Bewegung folgen, um eine allseitige Knochenanlagerung zu behalten.

Aufgrund der erfindungsgemässen Implantatgeometrie ist es auch möglich, annähernd isoelastische Verbindungen zwischen Knochen und Implantat zu schaffen, bei der sich der Knochen der Elastizität des Implantats durch Veränderungen der Matrix und Änderung des Mineralisationsgrades anpasst. Dies gelingt mit dem erfindungsgemässen Implantat ausserordentlich gut.

Die erfindungsgemässe Implantatgeometrie und die danach hergestellten Implantate ermöglichen jedenfalls insoweit einen isoelastischen Verbund zum kompakten und spongiösen Knochen des Kiefers, dass einerseits Kraftspitzen mit osteolytischer Wirkung, andererseits aber auch eine zu hohe Beweglichkeit des Implantats mit der möglichen Folge von mobilitätsbedingten Knochenauflösungen und Bindegewebeentzündungen vermieden werden. Hierzu bedarf es aber einer besonderen Spannungsverteilung der vom Implantat aufzunehmenden und in den Kiefer einzutragenden Kräfte im Bereich des kraftübertragenden Rahmens, des Gewindeträgers, des Übergangs zwischen Gewindeträger und Rahmen sowie im Übergang zum Abutment bzw. zur Brücke. Diesem Erfordernis trägt die erfindungsgemäße Lösung durch ein Implantat entsprechend den Merkmalen der vorgenannten Ansprüche Rechnung.

Hierzu gehört auch, dass im Bereich der Verbindung zwischen Abutment und Gewindeträger die Elastizität erhöht und eine elastische Zone geschaffen wird. Erfindungsgemäß wird anstelle des bisher für das Abutment verwendeten Titans ein weicherer Kunststoff verwendet, vorzugsweise Delrin, der bezüglich der Retention gegenüber der aufzementierten Krone stabil bleibt - Anspruch 9 und 10.

Für den isoelastischen Verbund zum kompakten und spongiösen Knochen des Kiefers ist auch die zielgerichtete Auswahl des Implantatmaterials von Bedeutung - Anspruch 11 und 18. Wie an sich bekannt, werden Implantate aus Reintitan hergestellt, dessen Härtegrad in vier Graduierungen verfügbar ist. Je weicher das Implantatmaterial ist, je mehr entspricht seine Elastizität dem Kieferknochen und umso leichter wächst der Knochen auf das eingesetzte Implantat. Muß beispielsweise aufgrund der zu übertragenden Kräfte auf Titan mit einer härteren Graduierung zurückgegriffen werden, kann man die dadurch entstehende nachteilige Beeinflussung der Elastizität durch eine entsprechende Bemessung des Basisteiles kompensieren, wobei härteres Titan eine größere Abstützung benötigt.

Bei einem weicheren, reinen Titan mit einer Zugfestigkeit von 250 - 450 Mpa sollte beispielsweise die Profilhöhe des Rahmens des Basisteiles relativ dünn gewählt werden und mindestens 0,6 mm betragen. Ist die Profilhöhe des Rahmens des Basisteiles zu groß, ist das Implantat resp. das Implantatmaterial nicht elastisch genug, sondern starr. Sind andererseits die kraftübertragenden Flächen des Implantates zu klein, kommt es auch zu Knochenauflösungen, weil die Last je Fläche zu gross ist. Knochenschäden können aber auch dann auftreten, wenn die in den Körper eingebrachte ununterbrochene Fremdkörperoberfläche zu gross ist.

Während weiches Titan gemäss Anspruch 11 eine gute Anschmiegbarkeit zum Knochen zeigt, ist es jedoch mit einer Legierung, bestehend aus ca. 85 Teilen Titan und nur 15 Teilen Molybdän, auch möglich, sehr elastische Implantate zu erzeugen. Eine solche Legierung, auch andere Verhältnisse zwischen Titan und Molybdän bringen ähnlich gute Ergebnisse, soll vorteilhaft dann gewählt werden, wenn die Implantate ausserordentlich grazil sein müssen

Nach einem weiteren Merkmal der Erfindung besitzt der Gewindeträger eine Einschnürung, die in etwa 1/3 der Länge des Gewindeträgers entspricht, wobei Oberflächenvergrößerungen, auf die nachstehen noch näher eingegangen wird, unterhalb dieser Einschnürung vorgesehen sind. Bei sehr hohen Biegekräften entstehen vornehmlich in diesem Bereich Deformationen, die das Basisteil des Implantates vor einem eventuellen Bruch schützen. Im Verhältnis zur Basis ist die Einschnürung so bemessen, das es bei auftretendenden Spannungsspitzen zu einem Bruch im Bereich der Einschnürung kommt, während das Basisteil unversehrt bleibt. Ein Austausch des Basisteils des Implantats kann dadurch vermieden werden. Denn der Bruch ist im allgemeinen die Folge einer prothetischen Überlast, die nach der Reparatur des Implantats korrigiert werden kann.
Im Falle eines Bruches erfolgt die Reparatur des Implantates beispielsweise durch Aufschneiden eines Gewindes auf den verbliebenen Gewindeträgerstummel oder durch Verschweißen des Gewindeträgerstummels mit einem Ersatzstück.

Da der Bereich der Einschnürung eine höhere Elastizität besitzt und sich dadurch auch vermehrt bewegt, würde eine Oberflächenvergrößerung zu höheren Knochenreizungen bis hin zu Entzündungen mit den bekannten nachteiligen Folgen führen. Wie bereits vorerwähnt, weist daher der Bereich unterhalb der Einschnürung Oberflächenvergrößerungen auf, während der übrige Teil des Gewindeträgers mit einer polierten Oberfläche ausgestattet ist.

Bei den erfindungsgemäßen Implantaten entsteht im Zentrum des Implantates ferner ein verstärkter Bereich mit einer größeren Steifigkeit. Die auftretenden Torsionskräfte werden dadurch noch besser vom Zentrum weg in den infektionsgeschützten, tiefer liegenden Bereich des Kieferknochens abgeleitet. Im Zentrum entsteht dabei eine geringere Bewegung und der kortikale Kieferknochen bekommt die auftretenden Kräfte direkter zugeleitet. Gleichzeitig wird durch die Ausbildung und Anordnung der Stege die Blutversorgung verbessert und das Einwachsen des Basisteiles in den Kieferknochen beschleunigt.

Insbesondere bei Implantaten mit mehreren, voneinander beabstandeten Basisteilen hat sich gezeigt, dass in den kieferkammnahen Bereichen des Gewindeträgers und des crestalen Basisteiles durch mechanische Reizungen ein bindegewebiger Umbau des Knochens entstehet, die zunächst abakteriell sind und erst zu einem späteren Zeitpunkt mit Bakterien besiedelt werden, so dass unter Umständen eine Resektion des crestalen Basisteiles erforderlich werden kann. Diese Reizungen sind in erster Linie auf die bisher vorgesehenen Oberflächenvergrößerungen zurückzuführen und konnten weitgehend eingeschränkt werden, indem diese Bereiche des Implantates, entgegen dem bekannten Stand der Technik, eine glatte, hochglanzpolierte Oberfläche gemäß Anspruch 14 aufweisen.

Dennoch ist es vorteilhaft, insbesondere bei Implantaten mit mehreren, voneinander beabstandeten Basisteilen, die basalen Basisteile und den die Basisteile miteinander verbindenden Schaft mit einer, die Oberfläche vergrößernden Struktur, die beispielweise durch Ätzen oder Sandstrahlen hergestellt wird, zu versehen, da hierdurch das Einwachsen unterstützt und insbesondere der primäre Halt der Basisteile in den infektionsgeschützten, tieferliegenden Bereichen des Kieferknochens verbessert wird - Anspruch 16.

Neben den bekannten Verfahren, die Oberflächenvergrößerungen durch Ätzen, Sandstrahlen oder durch mechanisch hergestellte Oberflächenstrukturen zu erzeugen, hat sich als besonders vorteilhaft das Aufbringen von Titankugeln auf die Basaloberflächen des Implantates erwiesen. Die Titankugeln besitzen eine Abmessung von 120 bis 200 µ und werden vorzugsweise in einer oder in mehreren Schichten auf die in Frage kommenden Oberflächen des Implantates aufgesintert. Insbesondere beim Auftrag mehrerer Schichten entstehen an den Titankugeln Unterschnitte, deren Geometrie die Bildung von Knochengewebe unterstützt und das Einwachsen des Implantates in den Kieferknochen bei Verkürzung der Einheilzeit und einer weiteren Steigerung der Belastbarkeit des eingeheilten Implantates beschleunigt.

Bedingt durch den manuellen Prozess bei der Ausbildung des Implantatbettes durch Fräsen ist die gefräste Öffnung zur Aufnahme des Implantates an der Einschubseite erfahrungsgemäß immer etwas größer als erwünscht. Es ist daher von Vorteil, insbesondere auf den zur Einschubrichtung des Implantates in das Implantatbett entgegengesetzt liegenden Oberflächen, mehrere Titankugelschichten aufzusintern. Auf diese Weise kommt es an diesen Oberflächenabschnitten zu einer Vergrößerung der Abmessung des Implantates, wodurch sich der Kraftschluss zwischen dem Implantat und dem Knochen im Bereich des Implantatbettes verbessert.

Während bei basal osseointegrierten Implantaten mit runden Basisteilen die Stege des Implantatfußes nach Ermessen des Arztes quer, längs oder schräg zum Kieferknochen positioniert werden konnten, ist die Positionierung der Stege und die Einschubrichtung der Implantate mit einem einseitigen rechteckförmigen Basisteil durch die Konfiguration des Implantatfußes festgelegt resp. vorbestimmt, wobei die Stege der vorbekannten Implantate praktisch immer parallel zur Längsrichtung des Kieferkammes zu liegen kommen. Zum Einsetzen der Implantate, die mit relativ hohem Flächendruck in die chirurgische Öffnung des Implantatbettes eingepresst werden, sind relativ große Kräfte aufzubringen, mit denen ausnahmslos der Gewindeträger beaufschlagt wird, da für das Einsetzen der Implantate praktisch keine anderen Bereiche des Implantates zur Verfügung stehen. Durch diese Kräfte können bereits beim Einsetzen Deformierungen und Mikrorisse am Gewindeträger und an den Stegen hervorgerufen werden, die dann später zu einem Implantatbruch führen können. Diesem Nachteil wird durch die Anordnung mindestens eines Steges in Einschubrichtung des Implantates gemäß Anspruch 5 entgegengewirkt. Ferner führt die um 120° versetzte Anordnung der Stege gleichzeitig zu einer gleichmäßigeren Übertragung der Kräfte auf den Außenrahmen der Basisteile sowohl beim Einsetzen das Implantates als auch nach dem Einwachsen des Implantates in den Kieferknochen. Bei dieser Steganordnung kann der Querschnitt der einzelnen Stege gegenüber den bekannten Implantaten sogar verringert werden, was letztlich zu einer weiteren Verbesserung der Blutversorgung führt.

In Fällen, in denen der Kraft- bzw. Lasteintrag prothetischerseits nicht mehr direkt über der Unterstützungsfläche des Basisteiles liegt, ist eine Ausbildung des Basisteiles gemäß Anspruch 6 von Vorteil, bei der mindesten ein Steg in der Längsachse des rechteckförmigen Außenrahmens des Basisteiles angeordnet ist, während zwei weitere Stege auf die Kreisringhälfte des Basisteiles geführt sind. Auch bei dieser Konfiguration des Basisteiles sind die Stege wieder gegeneinander um 120° versetzt angeordnet, wobei durch die auf die Kreisringhälfte geführten Stege eine höhere Kraftübertragung auf diesen Teil des Basisteiles erreicht wird.

Um den anatomischen Verhältnissen vor allem im distalen Unterkiefer bei asymmetrischer Anordnung des Gewindeträgers noch besser zu entsprechen, ist eine kreuzartige Anordnung der Stege, die wiederum um 90° gegeneinander versetzt sind, von Vorteil - Anspruch 17. Mit einer solchen Ausbildung und Anordnung der Stege des Basisteiles wird eine noch bessere Verteilung der über den Gewindeträger eingeleiteten Kräfte erreicht. Der Außenrahmen des Basisteiles ist bei dieser Ausführung durch die kreuzartige Anordnung in zwei separate Anschnitte geteilt, wobei der Radius R4 des Außenrahmens halb so groß ist wie der Radius des gegenüberliegenden rechteckigen oder quadratischen Außenrahmens. Durch die kreuzartige Anordnung der Stege und die spezifische Ausbildung des Außenrahmens des Basisteiles entstehen zwischen den Stegen äußere Ausnehmungen, die die Durchblutung verbessern und so den Einheilungsprozess beschleunigen und dauerhaft die Immunabwehr sichern.

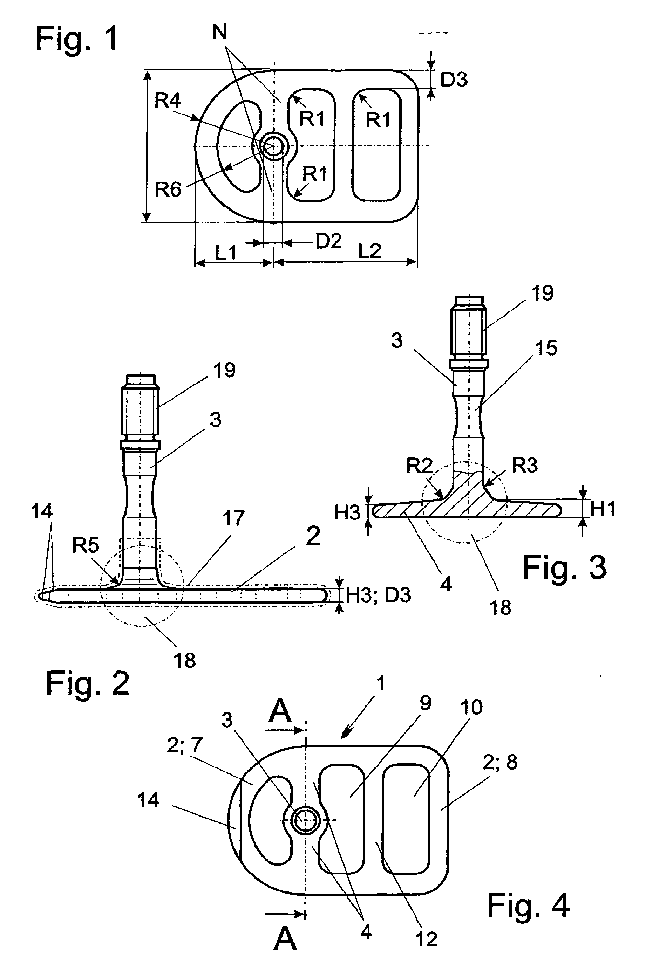

Eine besonders gute Lastverteilung wird erreicht, wenn das Übergangsprofil vom Gewindeträger zu den Stegen zwei Radien, nämlich einen oberen und einen unteren Radius, R3 und R2, aufweist. Ein krafttechnisch gutes Ergebnis erreicht man jedoch auch, wenn nur ein Radius R5 vorliegt, der jedoch einen Winkel von mehr als 90 Grad umfassen muss. (Fig. 3 und Fig.2)

Das Einsetzen und die bestimmungsgemäße Positionierung der basal osseointegrierten Implantate wird ferner dadurch erleichtert, wenn das Basisteil mit einer in Einschubrichtung liegenden Führungsschräge versehen ist - Anspruch 12.

Nach einem weiteren Merkmal der Erfindung ist der sich an die Kreisringhälfte anschließende rechteckförmige Außenrahmen des Basisteiles in einzelne Abschnitte unterteilt, die durch Querstege voneinander getrennt sind. Für die dentale Praxis kann so die ständig bereitzuhaltende Anzahl an basal osseointegrierten Implantaten mit unterschiedlich großen Basisteilen reduziert werden, da die jeweils erforderliche Implantatfußgröße durch einfaches Abtrennen der nicht benötigten Abschnitte des Basisteiles hergestellt werden kann. Die Herstellung und Lagerhaltung der Implantate kann auf diese Weise einfacher und wirtschaftlicher gestaltet werden.

Die Erfindung soll nachstehend an einem Ausführungsbeispiel näher erläutert werden. In der dazugehörigen Zeichnung zeigen:
- Fig. 1und 4: ein basal osseointegrierbares Dentalimplantat nach der Erfindung
- Fig. 2: die Seitenansicht von Fig. 4
- Fig. 3: den Teilschnitt A - A aus Fig. 4
- Fig. 5: das erfindungsgemäße Implantat mit einem hinsichtlich der Größe des Implantatfußes variablen Basisteil
- Fig. 6 bis 8: vorteilhafte Ausführungsformen von Dentalimplantaten nach der Erfindung

Das in Fig. 1 und 4 dargestellt basal osseointegrierbare Implantat 1 besteht bekanntermaßen aus dem Basisteil 2, das in ein durch chirurgischen Eingriff, beispielsweise durch Fräsen im Kieferknochen, hergestelltes Implantatbett eingesetzt wird und dem Gewindeträger 3, auf dem nach Einheilen des Implantates beispielsweise eine Krone oder eine anderweitige dentale Prothese befestigt wird.

Der Gewindeträger 3 ist über Stege N; 4; 5; 6 und 16 mit dem Außenrahmen 8 des Basisteiles 2 verbunden, wobei die Stege N; 4; 5; 6 und 16 über Radien R1 in das Profil des Außenrahmens 8 mit der Profilhöhe H3; D3 einmünden. Wie aus Fig. 3 hervorgeht, besitzen die Stege N; 4; 5; 6 und 16 der erfindungsgemäßen Implantate 1 im Fußbereich des Gewindeträgers 3 einen verstärkten Abschnitt 18 mit einer Profilhöhe H1, die in Richtung des Außenrahmens 8 und der Kreisringhälfte 7 des Basisteiles 2 auf die Profilhöhe H3; D3 des Außenrahmens 8 resp. der Kreisringfläche 7 abnimmt. Der Gewindeträger 3 selbst ist in seinem Fußbereich durch Radien R3 an die Stege N; 4; 5; 6 und 16 angeschlossen und verfügt über eine Einschnürung 15, die die Funktion einer Deformationszone bei extrem hohen Biegekräften übernimmt und eine Sollbruchstelle darstellt. In Abhängigkeit von den in das Implantat 1 einzutragenden Kräften und dem Härtegrad des gewählten Implantatwerkstoffes wird die Ausbildung des Implantates bei gegebenem Durchmesser D für den Gewindeträger 3 durch die Radien R1 und R3 und den Profilhöhen H1 und H3 bestimmt. Gleichzeitig bilden die Radien R1 und R3 und die Profilhöhen H1 und H3 zusammen mit dem Außengewinde 19 und einer geeigneten Auswahl des Abutmentmaterials Elastizitätszonen, die jeweils so optimiert werden, dass das Implantat über eine möglichst hohe Elastizität bei gleichzeitiger Sicherung des Lasteintrags in den Kieferknochen verfügt und auf diese Weise gleichzeitig eine isoelastische Osseointegration der Implantate in den Kieferknochen ermöglichen und gewährleisten. Die Implantate 1 besitzen durch diese Gestaltung praktisch ein vertikales Übergansprofil, das durch die Radien R3 und die Profilhöhen H1; H3 bestimmt wird und ein horizontales Übergangsprofil, das durch die Radien R1 gebildet wird. Beide Profile werden aufeinander abgestimmt, wodurch letztlich ein dreidimensionales und bezüglich der Lasteintragung optimiertes Implantatprofil vorliegt.

Die im Basisteil 2 vorgesehenen Aussparungen, die auch die Abschnitte 9; 10 und 11 kennzeichnen, werden so gewählt, dass sie einerseits möglichst groß sind, um eine optimale, das Einwachsen des Implantates 1 in den Kieferknochen fördernde Blutversorgung zu gewährleisten und andererseits eine möglichst runde, stressfreie Profilform der Stege N und Querstege 12; 13 gegeben ist. Hierbei erfolgt die Krafteinleitung im Gewindeträgerbereich völlig unabhängig von der Form und der Ausbildung der Ausnehmungen im Basisteil 2, während die Radien R3 zwischen Gewindeträger 3 und den Stegen N die Form und Ausbildung der Ausnehmungen ebenfalls nicht beeinflussen.

Durch den verstärkten Bereich im Fuß des Gewindeträgers 3 werden die auftreffenden Kräfte noch sicherer vom Implantat 1 aufgenommen und in die Kompakta des Kieferknochens eingeleitet. Gleichzeitig ist gewährleistet, dass der Gewindeträger 3 bei eventuell auftretenden extrem hohen Kräften leicht in die Spongiosa einfedern kann und dadurch einem möglichen Bruch des Implantates entgegengewirkt wird. Außerdem wird, wie vorstehend ausgeführt, durch die erfindungsgemäße Ausbildung der Stege N; 4; 5; 6 und 16 die Durchblutung, verbessert und dadurch auch die Knochenbildung und das Einwachsen des Implantates in den Kieferknochen gefördert.

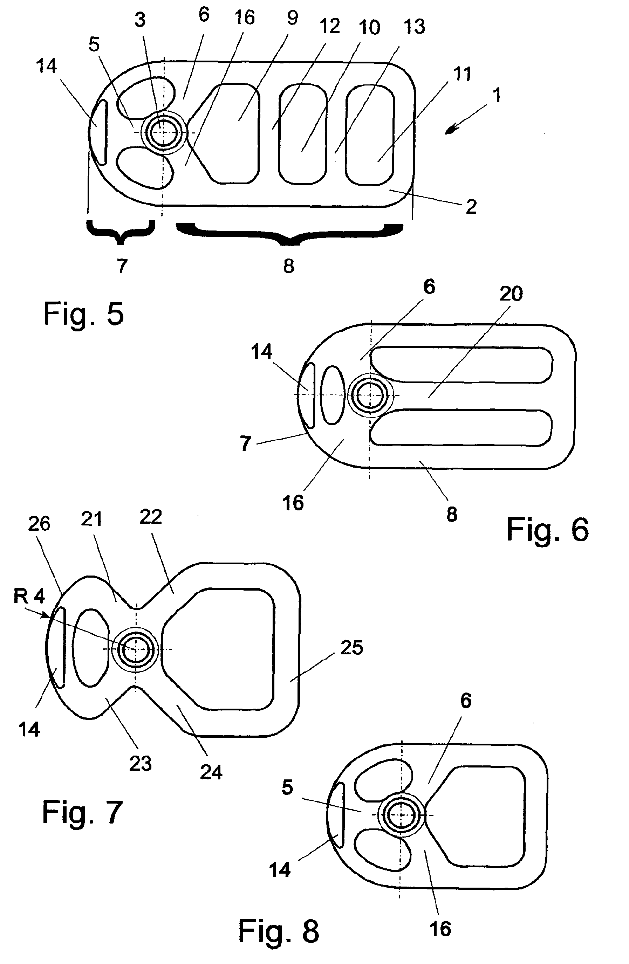

Das Basisteil 2 wird in einer ersten Ausführungsform durch eine Kreisringhälfte 7 und einen rechteckförmigen Außenrahmen 8 gebildet, die ansatzlos ineinander übergehen. Abweichend von dieser Konfiguration kann das Basisteil 2 auch eine runde Körperform besitzen oder gemäß der Ausführung nach Fig. 8 geformt sein.

Wie aus den Fig. 1; 4 und 5 weiter ersichtlich, ist der rechteckförmige Außenrahmen 8 in Abschnitte 9, 10; 11 unterteilt, die jeweils durch Querstege 12; 13 getrennt sind. Diese Ausbildung hat den Vorteil, dass der in Abhängigkeit von der Anatomie des Kieferknochens nicht benötigte Teil des Basisteiles leichter abgetrennt werden kann und so in der zahnärztlichen Praxis bei gleichzeitiger Verringerung der ständigen Verfügbarkeit an Implantaten mit unterschiedlichen Größen an Basisteilen eine weitgehende, einfache Anpassung der einzusetzenden Implantate an die Kieferanatomie des jeweiligen Patienten möglich ist.

Um ein schnelles Einwachsen des Implantates zu fördern und einen besseren, festen Halt im Kieferknochen zu erzielen, sind das Basisteil 2 und der von der Kompakta eingeschlossene Teil des Gewindeträgers 3, wie in Fig. 2 dargestellt, mit einer die Oberfläche vergrößernden Struktur 17 versehen, während der kieferkammnahe Bereich des Gewindeträgers 3 eine glatte, vorzugsweise polierte Oberfläche aufweist. Auf diese Weise kann abakteriellen Entzündungen, insbesondere im Bindegewebe im Bereich des Kieferkammes, die durch Oberflächenvergrößerungen hervorgerufen werden, mit einfachen Mitteln begegnet werden. Bei Implantaten mit mehreren, in axialer Richtung des Gewindeträgers 3 angeordneten Basisteilen werden das crestale Basisteil und der Gewindeträger mit einer glatten, polierten Oberfläche versehen und auf den oder die basalen Basisteile und auf den Schaft, der die Basisteile miteinander verbindet eine Oberflächenvergrößerung aufgetragen, die durch Sandstrahlen, Ätzen oder durch eine Kombination beider Verfahren hergestellt werden kann.

In bezug auf das Einbringen der Implantate 1 in das Implantatbett ist eine Steganordnung von Vorteil, bei der die Stege 5; 6 und 16, wie in Fig. 5 und 8 gezeigt, um 120° gegeneinander versetzt angeordnet sind, wobei mindestens ein Steg 5 in Einschubrichtung des Implantates in das Implantatbett liegen sollte. Durch die Abstützung des Gewindeträgers 3 über den in Einschubrichtung liegenden Steg 5 treten beim Einsetzen geringere Kräfte in den annähernd quer orientierten Stegen 6 und 16 auf. Das Entstehen von Deformierungen und Mikrorissen, wie sie insbesondere bei Implantaten mit quer zur Einschubrichtung angeordneten Stegen 4 auftreten können und letztlich einen Bruch des Implantates unterstützen, werden dadurch vermieden. Außerdem wird durch diese Steganordnung eine noch bessere, gleichmäßigere Aufteilung und Übertragung der über den Gewindeträger 3 eingeleiteten Kräfte auf das Basisteil 2 und auf den Kieferknochen erreicht.

Kräfte die in einem rechten Winkel zu den Stegen 4 gemäß dem in Fig.1 und 4 dargestellten Implantat 1 auftreten, werden vom Implantat gut aufgenommen, da die Stege 4 relativ lang sind und sich infolge der auftreffenden Kräfte, die praktisch wie Drehkräfte auf den Steg wirken, gut elastisch verwinden können. Kräfte, die jedoch in der Längsachse der Stege auftreffen, werden hingegen schlecht aufgenommen. Die Dauerschwingfestigkeit der Implantate sinkt bei einem derartigen Krafteintrag, wie durch Versuche ermittelt, sehr stark ab und es tritt sehr schnell ein Bruch im Bereich der Stege ein. Um diesen Nachteil zu umgehen, wurden Implantate 1 mit einer Steganordnung entsprechend den Fig. 5 bis 8 geschaffen.

Bei Implantaten mit einer Anordnung der Stege 6; 16 und 20 gemäß Fig. 6 wird aufgrund der asymmetrischen Positionierung des Gewindeträgers 3 der größte Teil der Lastkräfte auf der kurzen Seite des Implantates mit der Kreisringhälfte 7 des Außenrahmens des Basisteiles 2 eingetragen. Die Kräfte werden von den Stegen 6 und 16 gut aufgenommen und gleichmäßig auf den Kieferknochen verteilt. Wird der Gewindeträger 3 mit Kräften in Richtung der Längsachsen der Stege 6; 16 belastet, ist die Anordnung eines weiteren Steges 20 vorteilhaft, der annähernd quer zu diesen Kraftrichtungen liegt und dadurch die elastische Auslenkmöglichkeit verbessert. Außerdem ist die Kraftverteilung bei drei Stegen wesentlich besser als bei zwei Stegen 4, wie in Fig. 1 und 4 dargestellt.

Sollte aber eine größere Krafteinleitung auf den Abschnitt des Basisteiles 2 mit dem rechteckförmigen Außenrahmen 8 bestehen, sind im Interesse einer gleichmäßigen Kraftverteilung auch zwei Stege 6 und 16 in Richtung dieses Abschnittes zu orientieren, wie aus Fig. 5 und 8 hervorgeht.

Eine noch bessere und gleichmäßigere Kraftverteilung wird durch eine kreuzförmige Anordnung der Stege 21, 22; 23 und 24 gemäß Fig. 7 erzielt. Der bisher geschlossene Außenrahmen 8 des Basisteiles 2 wird bei dieser Ausführungsform in zwei separate Außenrahmen 25 und 26 geteilt, die jeweils an ihrem freien Ende in die Stege 22; 24 und 21; 22 einmünden. Durch die zwischen den Stegen 21; 22 und 23; 24 entstehenden freien Außenräumen wird die Durchblutung wesentlich verbessert.

Stimmen die Radien R6 und R4 innen und aussen am Rahmenteil (Basisteil) nicht überein, kann hierdurch die querlastabhängige Deformation des Ringes beeinflusst werden. Werden die Radien relativ zueinander so gewählt, dass der innere Radius R6 kleiner ist als der äussere R4, entstehen Spannungsspitzen an der Spitze der Rundung und im Bereich der Führungsschräge. Dies kann helfen, Spannungsspitzen vom Bereich des Gewindeträgers entfernt in den Knochen einzuleiten.

Nach einem weiteren Merkmale der Erfindung ist an der Einschubseite des Basisteiles 2 eine Führungsschräge 14 vorgesehen, durch die das Einsetzen und Positionieren des Implantates 1 im Implantatbett erleichtert werden.

### BEZUGSZEICHENAUFSTELLUNG

- 1: basal osseointegrierbares Implantat
- 2: Basisteil
- 3: Gewindeträger
- 4: Steg
- 5: Steg
- 6: Steg
- 7: Kreisringhälfte
- 8: rechteckförmiger Außenrahmen
- 9: Abschnitt des Basisteiles
- 10: Abschnitt des Basisteiles
- 11: Abschnitt des Basisteiles
- 12: Quersteg
- 13: Quersteg
- 14: Führungsschräge
- 15: Einschnürung
- 16: Steg
- 17: Oberflächenvergrößerung
- 18: verstärkter Abschnitt
- 19: Gewinde
- 20: Steg
- 21: Steg
- 22: Steg
- 23: Steg
- 24: Steg
- 25: Außenrahmen
- 26: Außenrahmen

- D: Durchmesser des Gewindeträgers
- N: Stege
- H1: Höhe des Stegprofils im Bereich des Gewindeträgers
- H2: Höhe des Stegprofils im Anschlussbereich Steg/Rahmen des Basisteiles
- H3: Profilhöhe des Rahmens des Basisteiles
- R1: Radius am Übergang Steg/Rahmen des Basisteiles
- R2: Unterer Radius am Übergang Gewindeträger/Steg
- R3: Oberer Radius am Übergang Gewindeträger/Steg
- R4: Radius des Außenrahmens
- R5: Radius am Übergang Gewindeträger/Steg
- R6: Innenradius am Ausserahmen des Basisteils

## Patentansprüche

1. Dentalimplantat für die enossale und kombiniert enossale/subperiostale, basale Osseointegration mit einem aus dem Kiefer herausragenden Gewindeträger, der orthogonal zu einem kraftübertragenden Fuß- oder Basisteil angeordnet und mit dem Basisteil über Stege verdrehfest verbunden ist, wobei der Basis- oder Fußteil durch einen ringförmigen Grundkörper oder durch einen, in sich geschlossenen Rahmen aus unterschiedlichen geometrischen Grundformen gebildet ist, **dadurch gekennzeichnet, dass**
- a) die Implantatkonfiguration bei gegebenem Durchmesser D des Gewindeträgers (3) durch einen oberen Radius am Übergang Gewindeträger/Steg R3 und einen unteren Radius am Übergang Gewindeträger/Steg R2 oder einen Übergangsradius am Übergang Gewindeträger/Steg R5 und die Höhe des Stegprofils im Bereich des Gewindeträgers H1 und die Höhe des Stegprofils im Anschlußbereich Steg/Rahmen H2 des Basisteils (2), die im Beziehung zu den Radien R1 am Übergangsbereich der Stege N zum Rahmen des Basisteils (2) mit der Profilhöhe des Basisteils H3 stehen, bestimmt ist
- b) der Gewindeträger bei gegebenem Durchmesser D durch den oberen Radius R3 und den unteren Radius R2 oder den Übergansradius R5, der einen Winkel von mehr als 90 Grad umspannt, in seinem Fußbereich an die Stege (N) angeschlossen ist, und
- c) der Profilquerschnitt der Stege (N) im Bereich des Gewindeträgers (3) am Größten ist und sich von der Höhe H1 in Richtung des Rahmens des Basisteiles (2) auf die Höhe des Rahmenprofils (H3) verjüngt, so dass im Zentrum des Implantates ein verstärkter Bereich mit einer größeren Steifigkeit entsteht und dass die auftretenden Torsionskräfte vom Zentrum weg in den peripheren Bereich des Kieferknochens abgeleitet werden.

2. Dentalimplantat nach Anspruch 1, **dadurch gekennzeichnet, dass** der Gewindeträger (3) über mehrere Stege N mit dem Rahmen des Basisteiles (2) verbunden ist und diese Stege N_{1 bis n} mit Radien R1 am Profil des Rahmens des Basisteiles (2) angeschlossen sind.

3. Dentalimplantat nach Anspruch 1, **dadurch gekennzeichnet, dass** das Implantat (1) über Elastizitätszonen verfügt, die durch die Profilgeometrie in den Anschlussbereichen zwischen den Stegen N und dem Basisteil (2), den Stegen N und dem Gewindeträger (3), dem Gewinde (19) des Gewindeträgers (3) und einem anzuschließenden Abutment und im Schaft des Gewindeträgers (3) bestimmt werden.

4. Dentalimplantat nach Anspruch 1 bis 3, **dadurch gekennzeichnet, dass** Stege N gegeneinander unter einem Winkel von 120° versetzt sind.

5. Dentalimplantat nach Anspruch 1 bis 4, **dadurch gekennzeichnet, dass** mindestens ein Steg (5) der Stege (5; 6; 16) in Einschubrichtung des Implantates (1) in das Implantatbett angeordnet ist.

6. Dentalimplantat nach Anspruch 1 bis 4, **dadurch gekennzeichnet, dass** mindestens ein Stege (20) in der Längsachse des rechteckförmigen Außenrahmens (8) des Basisteiles (2) positioniert ist.

7. Dentalimplantat nach Anspruch 1 bis 5, **dadurch gekennzeichnet, dass** der sich an die Kreisringhälfte (7) anschließende rechteckförmige Außenrahmen (8) in einzelne Abschnitte (9; 10; 11), die durch Querstege (12; 13) voneinander getrennt sind, unterteilt ist und die Querstege (12; 13) mit Radien R1 am Profil des Außenrahmens (8) des Basisteiles (2) angeschlossen sind.

8. Dentalimplantat nach einem der Ansprüche 1 bis 7, **dadurch gekennzeichnet, dass** der Gewindeträger (3) mit einer Einschnürung (18) versehen ist und die Dimensionierung der Einschnürung (18) in Abhängigkeit von der Ausbildung des Basisteiles (2) so gewählt ist, dass das Implantat (1) bei extrem hohen Kräften im Bereich der Einschnürung (18) bricht.

9. Dentalimplantat nach einem der Ansprüche 1 bis 8, **dadurch gekennzeichnet, dass** eine Elastizitätszone zwischen dem Gewinde (19) und einem Abutment durch die Auswahl eines geeigneten Abutmentmaterials geschaffen wird.

10. Dentalimplantat nach Anspruch 9, **dadurch gekennzeichnet, dass** das Abutment ein Innengewinde und der Gewindeträger des Implantats ein Aussengewinde aufweist und das Abutment aus einem Kunststoff hergestellt ist.

11. Dentalimplantat nach Anspruch 1 bis 9, **dadurch gekennzeichnet, dass** das Implantat in an sich bekannter Weise vorzugsweise aus Reintitan mit einer Zugfestigkeit von 250-450 Mpa besteht und der Härtegrad des einzusetzenden Implantatwerkstoffes in Abhängigkeit von den einzutragenden Kräften ausgewählt ist und die Implantatgeometrie, insbesondere die des Basisteiles (2) und des Steges, bestimmt.

12. Dentalimplantat nach Anspruch 1 bis 11 und 18 bis 20, **dadurch gekennzeichnet, dass** das Basisteil (2) mit einer Führungsschräge (14) versehen ist,

13. Dentalimplantat nach Anspruch 1 bis 12, **dadurch gekennzeichnet, dass** die Oberfläche des Basisteiles (2) und der basale Teil des Gewindeträgers (3), der von der Kompakta des Kieferknochens eingeschlossen wird, mit einer Oberflächenvergrößerung (17) versehen ist.

14. Dentalimplantat nach Anspruch 1 bis 13 und 18 bis 20, **dadurch gekennzeichnet, dass** der im Bereich der Mukose und des cretalen Knochenanteils liegende Teil des Gewindeträgers (3) eine glatte, polierte Oberfläche aufweist.

15. Dentalimplantat nach Anspruch 1 bis 9, **dadurch gekennzeichnet, dass** die Stege N einen runden oder ovalen Profilquerschnitt besitzen.

16. Dentalimplantat nach einem der Ansprüche 1 bis 15, **dadurch gekennzeichnet, dass** bei Implantaten mit mehreren Basisteilen der Gewindeträger und das crestale Basisteil eine polierte Oberfläche aufweisen, während das bzw. die basalen Basisteile und der die Basisteile verbindende Schaft mit einer, die Oberfläche vergrößernden Struktur versehen sind.

17. Dentalimplantat nach Anspruch 1 bis 3, **dadurch gekennzeichnet, dass** Stege (21; 22; 23, 24) kreuzartig und zueinander um 90° versetzt angeordnet sind und der Außenrahmen des Basisteiles (2) in zwei separate Abschnitte (25; 26) unterteilt ist, die jeweils in die freien Enden der Stege (21; 22; 23, 24) einmünden, wobei der Radius R4 des Außenrahmens (26) in etwa halb so groß ist wie die Breite des Außenrahmens (25) und zwischen den benachbarten Stegen (21; 22) und (23; 24) jeweils eine freie, äußere Aussparung vorhanden ist.

18. Dentalimplantat nach einem der Ansprüche 1 bis 17, **dadurch gekennzeichnet, dass** das Implantatmaterial eine Legierung aus Titan und Molybdän ist.

19. Dentalimplantat nach einem der Ansprüche 1 bis 16, **dadurch gekennzeichnet, dass** auf den basalen Oberflächenabschnitten des Basisteiles (2) und des Gewindeträgers (3) eine aus Titankugeln bestehende Schicht aufgebracht ist.

20. Dentalimplantat nach Anspruch 20, **dadurch gekennzeichnet, dass** auf den entgegengesetzt zur Einschubrichtung des Implantates in das Implantatbett liegenden Oberflächenabschnitten mehrere, aus Titankugeln bestehende Schichten aufgetragen sind.

21. Dentalimplantat nach einem der Ansprüche 19 und 20, **dadurch gekennzeichnet, dass** der Durchmesser der Titankugeln annähernd 120 bis 200 µm beträgt und die Schichten durch Sinterverfahren aufgetragen sind.

## Claims

1. Dental implant for enossal and combined enossal/subperiosteal basal osseointegration with a threaded part (3) projecting out of the jaw, which threaded part (3) is arranged orthogonally to a force-transferring foot part or base part (2) and which is fastened tightly to prevent rotation with respect to the base part (2) through bars (4; 5; 6), so that the base or foot part (2) is made up of an annular base body or by an inherently closed frame of various geometric base forms (7; 8), **characterized in that**
- a) the implant configuration, for a given diameter D of the threaded part (3) is determined by an upper radius at the threaded part/bar transition R3 and a lower radius at the threaded part/bar transition R5 and the height of the bar profile in the region of the threaded part H1 and the height of the bar profile in the region of the connection bar/framework H2 of the base part (2), which stand, with respect to the radii R1 at the transition region of the bar N to the framework of the base part (2) with the profile height of the base part H3,
- b) for a given diameter D, the threaded part through the upper radius R3 and the lower radius R2 or the transition radius R5, which covers an angle of more than 90°, is connected in its foot region to the bar (N), and
- c) the profile cross-section of the bars (N) is greatest in the region of the threaded part (3) and narrows from the height H1 in the direction of the framework of the base part (2) to the height of the framework profile (H3), so that there is a stiffer reinforced region in the center of the implant and so that the torsion forces applied are led away from the center towards the peripheral region of the jawbone.

2. Dental implant according to Claim 1, **characterized in that** the threaded part (3) is connected to the framework of the base part (2) through a multiplicity of bars N and these bars N_{1 to n} are connected with radii R1 to the profile of the framework of the base part (2).

3. Dental implant according to Claim 1, **characterized in that** the implant (1) has elasticity zones defined by the profile geometry in the connection regions between the bars N and the base part (2), the bars N and the threaded part (3), the thread (19) of the threaded part and an abutment to which it is to be connected and in the shaft of the threaded part (3).

4. Dental implant according to Claims 1 to 3, **characterized in that** bars N are at an angle of 120° to each other.

5. Dental implant according to Claims 1 to 4, **characterized in that** at last one bar (5) of the bars (5; 6; 16) is arranged in the path or insertion of the implant (1) into the implant bed.

6. Dental implant according to Claims 1 to 4, **characterized in that** at least one bar (20) is positioned in the longitudinal axis of the rectangular external framework (8) of the base part (2).

7. Dental implant according to Claims 1 to 5, **characterized in that** the rectangular external framework (8) which connects to the half of the annular ring (7) is divided into individual segments (9; 10; 11), which are separated from each other by cross-bars (12; 13) and the cross-bars (12; 13) are connected with radii R1 at the profile of the external framework (8) of the base part (2).

8. Dental implant according to one of Claims 1 to 7, **characterized in that** the threaded part (3) has a constriction (15) and the dimensioning of the constriction (15) is selected, depending on the design of the base part (2), so that the implant (1) breaks in the vicinity of the constriction in case of extremely high forces.

9. Dental implant according to one of Claims 1 to 8, **characterized in that** the zone of elasticity between the thread (19) and an abutment is provided by selection of a suitable abutment material.

10. Dental implant according to Claim 9, **characterized in that** the abutment has an internal thread and the threaded part of the implant has an external thread and the abutment is made of a plastic.

11. Dental implant according to Claims 1 to 9, **characterized in that** the implant preferably comprises, in a manner that is itself known, pure titanium with a tensile strength of 250-450 MPa and the hardness of the material to be used for the implant is selected in dependence on the forces to be carried and the implant geometry, especially that of the base part (2) and of the bars.

12. Dental implant according to claims 1 to 11 and 18 to 20, **characterized in that** the base part (2) is made with a guide slope (14).

13. Dental implant according to Claims 1 to 12, **characterized in that** the surfaces of the base part (2) and of the basal part of the threaded part (3), which are enclosed by the compacta of the jawbone are given a surface enlargement (17).

14. Dental implant according to Claims 1 to 13 and 18 to 20, **characterized in that** the portion of the threaded part (3) lying in the vicinity of the mucosa and of the crestal part of the bone has a smooth, polished surface.

15. Dental implant according to Claims 1 to 9, **characterized in that** the bars N have round or oval profile cross-sections.

16. Dental implant according to one of Claims 1 to 15, **characterized in that** the threaded part and the crestal base part have polished surfaces for implants with a multiplicity of base parts, while the basal part or parts and the shaft connecting the base part are provided with a structure that enlarges the surface.

17. Dental implant according to one of Claims 1 to 15, **characterized in that** the bars (21; 22; 23; 24) are arranged in a cross form and are shifted at 90° with respect to each other and the outer framework of the base part (2) is divided into two separate sections (25; 26), each of which enters the free ends of the bars (21; 22; 23; 34), so that the radius R4 of the external framework (26) is about half as great as the width of the external frame (25) and external open cutout is present between each of the adjacent bars (21; 22) and (23; 24).

18. Dental implant according to one of Claims 1 to 17, **characterized in that** the implant material is an alloy of titanium and molybdenum.

19. Dental implant according to one of Claims 1 to 18, **characterized in that** a layer of titanium beads is applied onto the basal surface segments of the base part (2) and the threaded part (3).

20. Dental implant according to Claim 19, **characterized in that** several layers comprising titanium beads are applied on the surface segments of the implant opposite to the path of insertion of the implant into the implant bed.

21. Dental implant according to one of Claims 19 and 20, **characterized in that** the diameter of the titanium beads is approximately 120 to 200 µm and the layers are applied by sintering processes.

## Revendications

1. Implant dentaire destiné à une ostéo-intégration basale endo-osseuse et endo-osseuse/sous-périostée combinée, avec un support fileté (3) dépassant de la mâchoire, qui est disposé perpendiculairement à une partie de pied ou de base (2) transmettant les forces et relié à la partie de base (2) de manière à empêcher sa rotation par des barrettes (4 ; 5 ; 6), la partie de base ou de pied (2) étant formée par un corps de base annulaire ou par un cadre fermé composé de différentes formes géométriques de base (7 ; 8), **caractérisé en ce que**
- a) la configuration de l'implant est déterminée, pour un diamètre D donné du support fileté (3), par un rayon supérieur à la transition entre le support fileté et la barrette R3 et un rayon inférieur à la transition entre le support fileté et la barrette R5 et la hauteur du profil de la barrette au niveau du support fileté H1 et la hauteur du profil de la barrette dans la zone de raccordement entre la barrette et le cadre H2 de la partie de base (2), qui sont en relation avec les rayons R1 au niveau de la transition des barrettes N vers le cadre partie de base (2) avec la hauteur de profil de la partie de base H3,
- b) le support fileté est raccordé dans sa zone de pied aux barrettes (N), pour un diamètre D donné, par le rayon supérieur R3 et le rayon inférieur R2 ou le rayon de courbure R5, qui couvre un angle de plus de 90° ; et
- c) la section de profil des barrettes (N) est maximale au niveau du support fileté (3) et se rétrécit de la hauteur H1 vers le cadre de la partie de base (2) au niveau du profilé de cadre (H3), de sorte qu'il se crée au centre de l'implant une zone renforcée ayant une plus grande rigidité et que les efforts de torsion qui se produisent sont transmis de façon à les éloigner du centre dans la zone périphérique de l'os de la mâchoire.

2. Implant dentaire selon la revendication 1, **caractérisé en ce que** le support fileté (3) est relié par plusieurs barrettes N au cadre de la partie de base (2) et ces barrettes N_{1 à n} se raccordent par des rayons R1 au profil du cadre de la partie de base (2).

3. Implant dentaire selon la revendication 1, **caractérisé en ce que** l'implant (1) possède des zones d'élasticité déterminées par la géométrie du profil dans les zones de raccordement entre les barrettes N et la partie de base (2), les barrettes N et le support fileté (3), le filetage (19) du support fileté (3) et un pilier à raccorder et dans le corps du support fileté (3).

4. Implant dentaire selon les revendications 1 à 3, **caractérisé en ce que** les barrettes N sont décalées les unes par rapport aux autres selon un angle de 120°.

5. Implant dentaire selon les revendications 1 à 4, **caractérisé en ce qu'**au moins une barrette (5) des barrettes (5 ; 6 ; 16) est disposée dans le lit de l'implant dans le sens d'insertion de l'implant (1).

6. Implant dentaire selon les revendications 1 à 4, **caractérisé en ce qu'**au moins une barrette (20) est positionnée dans l'axe longitudinal du cadre rectangulaire (8) de la partie de base (2).

7. Implant dentaire selon les revendications 1 à 5, **caractérisé en ce que** le cadre extérieur rectangulaire (8) se raccordant à la moitié d'anneau circulaire (7) est partagé en différents segments (9 ; 10 ; 11) séparés les uns des autres par des traverses (12 ; 13), et les traverses (12 ; 13) sont raccordées avec des rayons R1 au profil du cadre extérieur (8) de la partie de base (2).

8. Implant dentaire selon l'une des revendications 1 à 7, **caractérisé en ce que** le support fileté (3) est doté d'un resserrement (15) et le dimensionnement du resserrement (18) est choisi en fonction de la conformation de la partie de base (2), de telle sorte que l'implant (1) se casse si des forces extrêmement élevées sont exercées au niveau du resserrement (15).

9. Implant dentaire selon l'une des revendications 1 à 8, **caractérisé en ce qu'**une zone d'élasticité est créée entre le filetage (19) et un pilier par le choix d'un matériau de pilier approprié.

10. Implant dentaire selon la revendication 9, **caractérisé en ce que** la butée possède un filetage intérieur et le support fileté de l'implant possède un filetage extérieur et le pilier est fabriqué dans une matière plastique.

11. Implant dentaire selon les revendications 1 à 9, **caractérisé en ce que** l'implant se compose de préférence, de manière connue, de titane pur ayant une résistance à la traction de 250-450 MPa et la dureté du matériau d'implant à utiliser est choisie en fonction des forces à transmettre et détermine la géométrie de l'implant, et en particulier celle de la partie de base (2) et de la barrette.

12. Implant dentaire selon les revendications 1 à 11 et 18 à 20, **caractérisé en ce que** la partie de base (2) est dotée d'un biseau de guidage (14).

13. Implant dentaire selon les revendications 1 à 12, **caractérisé en ce que** la surface de la partie de base (2) et la partie basale du support fileté (3), qui est enfermée par l'os compact de la mâchoire est dotée d'un agrandissement de la surface (17).

14. Implant dentaire selon les revendications 1 à 13 et 18 à 20, **caractérisé en ce que** la partie du support fileté (3) située entre la zone de la muqueuse et de la partie osseuse de la crête possède une surface lisse et polie.

15. Implant dentaire selon les revendications 1 à 9, **caractérisé en ce que** les barrettes N possèdent une section de profil ronde ou ovale.

16. Implant dentaire selon l'une des revendications 1 à 15, **caractérisé en ce que** pour les implants comportant plusieurs parties de base, le support fileté et la partie de base crestale possèdent une surface polie, tandis que la ou les parties de base basales et le corps reliant les parties de base sont dotés d'une structure agrandissant la surface.

17. Implant dentaire selon les revendications 1 à 3, **caractérisé en ce que** barrettes (21 ; 22 ; 23, 24) sont décalés en croix de 90° les uns par rapport aux autres et le cadre extérieur de la partie de base (2) est partagé en deux parties séparées (25 ; 26) qui débouchent chacune dans les extrémités libres des barrettes (21 ; 22 ; 23, 24), le rayon R4 du cadre extérieur (26) étant à peu près deux fois plus petit que la largeur du cadre extérieur (25) et une découpe libre étant prévue entre les barrettes voisines (21 ; 22) et (23 ; 24).

18. Implant dentaire selon l'une des revendications 1 à 17, **caractérisé en ce que** le matériau de l'implant est un alliage de titane et de molybdène.

19. Implant dentaire selon l'une des revendications 1 à 16, **caractérisé en ce qu'**une couche composée de billes de titane est appliquée sur les parties de surface basales de la partie de base (2) et du support fileté (3).

20. Implant dentaire selon la revendication 19, **caractérisé en ce que** plusieurs couches composées de billes de titane sont appliquées en sens inverse de la direction d'insertion de l'implant dans les parties de surface situées dans le lit de l'implant.

21. Implant dentaire selon l'une des revendications 19 et 20, **caractérisé en ce que** le diamètre des billes de titane est approximativement de 120 à 200 µm et les couches sont appliquées par un procédé de frittage.
